# EUROPEAN PATENT APPLICATION

(11) **EP 2 750 369 A2**
(43) Date of publication of application: **02.07.2014**
(21) Application number: 13199630.8
(22) Date of filing: 27.12.2013
(51) Int. Cl.: H04N 5/217

(54) **Photoelectric conversion device, image pickup system, and driving method of photoelectric conversion device**

(30) Priority: 28.12.2012 JP 2012287251
(71) Applicant: Canon Kabushiki Kaisha, Tokyo 146-8501 (JP)
(72) Inventor: Muto, Takashi, Tokyo, Tokyo 146-8501 (JP); Suzoki, Takeru, Tokyo, Tokyo 146-8501 (JP); Matsuno, Yasushi, Tokyo, Tokyo 146-8501 (JP)
(74) Representative: TBK

(57) **Abstract**

A photoelectric conversion device includes analog signal output units (11, 20-n) including pixels (11) and configured to output analog signals based on pixels, and signal processing units (30-n, 31, 40-n). Each of the signal processing units is provided correspondingly to one of the analog signal output units and includes a gain application unit (GA) configured to apply a gain to an analog signal and an AD conversion unit (30-n, 31, 40-n). The gain application unit selectively outputs a first amplified signal obtained by applying a first gain of 1 or less to the analog signal or a second amplified signal obtained by applying a second gain, smaller than the first gain, to the analog signal. The AD conversion unit converts, from analog to digital, the first or second amplified signal output from the gain application unit.

## Description

### BACKGROUND OF THE INVENTION

### Field of the Invention

One disclosed aspect of the embodiments relates to a photoelectric conversion device, an image pickup system, and a driving method of a photoelectric conversion device.

### Description of the Related Art

In a field of image pickup apparatuses, a plurality of gains may be applied to the same signal. Japanese Patent Laid-Open No. 2010-016416 describes an image pickup system in which each of amplifiers provided for respective columns of a pixel array amplify a single signal with different gains of 1 or more, and one of resulting signals is selected in accordance with the signal level. In addition, Japanese Patent Laid-Open No. 2010-016416 describes that an analog-to-digital (AD) converter is provided for each of the amplifiers.

In Japanese Patent Laid-Open No. 2010-016416, since a signal is amplified with gains of 1 or more, it is desired that an input dynamic range of a circuit downstream of an amplifier be wide. However, for widening the input dynamic range, the configuration of such a circuit becomes complicated.

### SUMMARY OF THE INVENTION

The present invention provides a photoelectric conversion device, an image pickup system, and a driving method of photoelectric conversion device in which the configuration of a circuit downstream of an amplifier may be prevented from being complicated.

The present invention in its first aspect provides a photoelectric conversion device as specified in claims 1 to 10.

The present invention in its second aspect provides an image pickup system as specified in claim 11.

The present invention in its third aspect provides a driving method for a photoelectric conversion device as specified in claim 12.

Further features of the present invention will become apparent from the following description of embodiments with reference to the attached drawings.

### BRIEF DESCRIPTION OF THE DRAWINGS

Fig. 1 is a diagram illustrating an example of the configuration of a photoelectric conversion device.
Fig. 2 is a diagram illustrating an example of the configuration of a column comparing unit.
Fig. 3 is a timing diagram according to a first embodiment.
Fig. 4 is a diagram illustrating an example of the configuration of a pixel.
Fig. 5 is a diagram illustrating an example of the configuration of an amplifier.
Fig. 6 is a timing diagram according to a second embodiment.
Fig. 7 is a diagram illustrating an example of the configuration of a column comparing unit.
Fig. 8 is a diagram illustrating an example of the configuration of a column comparing unit.
Fig. 9 is a diagram illustrating an example of the configuration of a column comparing unit.
Fig. 10 is a timing diagram according to a fifth embodiment.
Fig. 11 is a diagram illustrating an example of the configuration of a column comparing unit.
Fig. 12 is a timing diagram according to a sixth embodiment.
Fig. 13 is a diagram illustrating an example of the configuration of a photoelectric conversion device.
Fig. 14 is a diagram illustrating an example of the configuration of a column comparing unit.
Fig. 15 is a timing diagram according to a seventh embodiment.
Fig. 16 is a diagram illustrating an example of the configuration of a column comparing unit.
Fig. 17 is a timing diagram according to an eighth embodiment.
Fig. 18 is a diagram illustrating an example of the configuration of a column comparing unit.
Fig. 19 is a diagram illustrating an example of the configuration of a column comparing unit.
Fig. 20 is a timing diagram according to a tenth embodiment.
Fig. 21 is a diagram illustrating an example of the configuration of an image capturing system.

### DESCRIPTION OF THE EMBODIMENTS

One disclosed feature of the embodiments may be described as a process which is usually depicted as a timing diagram. A timing diagram may illustrate the timing relationships of several entities, such as signals, events, etc. Although a timing diagram may describe the operations as a sequential process, some operations may be performed in parallel or concurrently. In addition, unless specifically stated, the order of the operations or timing instants may be re-arranged. Furthermore, the timing or temporal distances may not be scaled or depict the timing relationships in exact proportions.

### First Embodiment

A first embodiment will be described with reference to drawings.

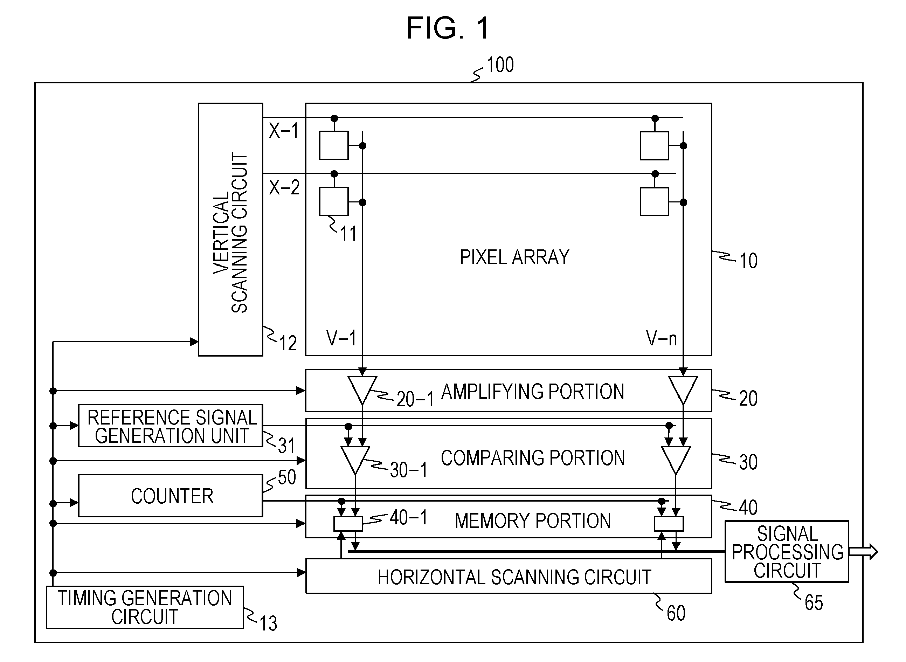

Fig. 1 is a diagram illustrating an example of the configuration of a photoelectric conversion device according to the first embodiment. A photoelectric conversion device 100 includes a pixel array 10, an amplifying portion 20, a comparing portion 30, a memory portion 40, a counter 50, a vertical scanning circuit 12, a horizontal scanning circuit 60, and a signal processing circuit 65. A timing generation circuit 13 generates a signal used to control operation of the photoelectric conversion device 100.

The pixel array 10 includes a plurality of pixels 11 that are arranged in a matrix. Output nodes of a plurality of pixels arranged in a single column in the pixel array 10 are connected to a common signal line V-n. Here, n is an integer and a common signal line V-n indicates that the common signal line V-n is the n-th line from the left of the pixel array 10. Hereinafter, elements arranged for the columns of the pixel array 10 will be denoted similarly.

The amplifying portion 20 includes a plurality of amplifiers 20-n. Each of the amplifiers 20-n amplifies a signal supplied from a corresponding signal line V-n.

The comparing portion 30 includes a plurality of column comparing units 30-n. Each of the column comparing units 30-n outputs a comparison result obtained by comparing an output from a corresponding amplifier 20-n with a reference signal supplied from a reference signal generation unit 31.

The memory portion 40 includes a plurality of column memories 40-n. Each of the column memories 40-n holds a count signal output from the counter 50 upon receiving an output from a corresponding column comparing unit 30-n.

When the horizontal scanning circuit 60 selects one of the column memories 40-n, the signal held in the selected column memory 40-n is transmitted to the signal processing circuit 65.

It may also be said in other words that each column has an analog signal output unit and a signal processing unit. The analog signal output unit includes a plurality of pixels 11 arranged for the column in the pixel array 10 and an amplifier 20-n arranged for the plurality of pixels 11. The signal processing unit has a function of performing analog-to-digital (AD) conversion on a signal output from the analog signal processing unit.

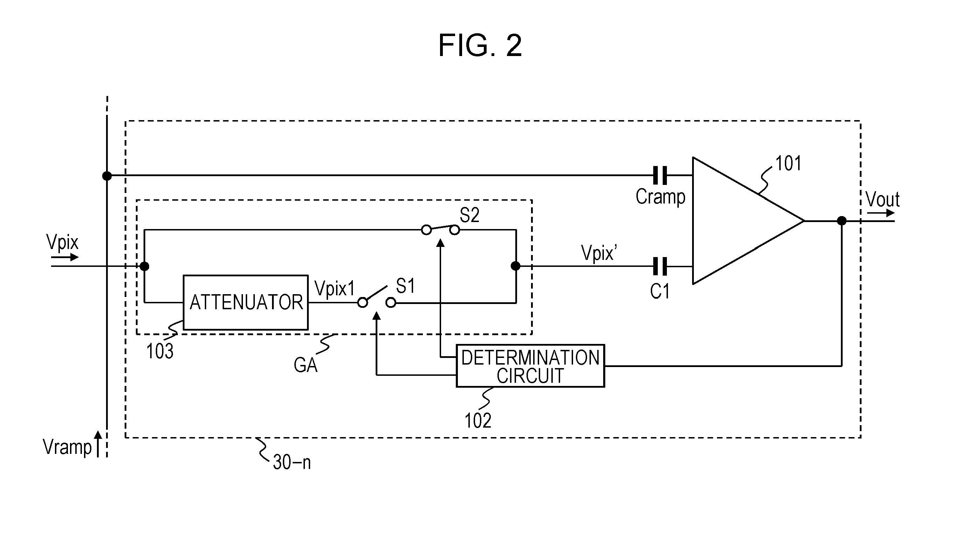

Fig. 2 illustrates the configuration of a column comparing unit 30-n according to the first embodiment. The column comparing unit 30-n includes a comparator 101, a determination circuit 102, a gain application unit GA, and input capacitors Cramp and C1. The gain application unit GA according to the first embodiment includes an attenuator 103 and switches S1 and S2. A reference signal Vramp is input to one of input nodes of the column comparing unit 30-n via the input capacitor Cramp. An output of an amplifier 20-n is connected to the other input node of the column comparing unit 30-n either via the switch S2 and the input capacitor C1 or via the attenuator 103, the switch S1, and the input capacitor C1. An output of the comparator 101 is connected to the determination circuit 102. The determination circuit 102 performs control such that either of the switches S1 and S2 is closed in response to an output from the comparator 101. As a result, a signal obtained by amplifying an output from the amplifier 20-n using the attenuator 103 or an output from the amplifier 20-n is supplied to the comparator 101. An output of the amplifier 20-n is amplified with a gain of less than 1 and output from the attenuator 103. A signal that is supplied from the amplifier 20-n and input to the comparator 101 via the switch S2 is a signal obtained by amplifying an analog signal by a gain of 1.

The gain application unit GA is configured including a portion that converts the amplitude of an input signal, that is, a portion that contributes to application of a gain to an analog signal, is constituted only by passive elements. In the first embodiment, an output from the attenuator 103 is denoted by Vpix1 and the electric potential at an input node of the input capacitor C1 is denoted by Vpix'.

In the first embodiment, for each column, an analog signal output unit, which outputs an analog signal, is constituted including a plurality of pixels 11 and an amplifier 20-n and an AD conversion unit is constituted including a column comparing unit 30-n and a column memory 40-n together with the reference signal generation unit 31 and the counter 50.

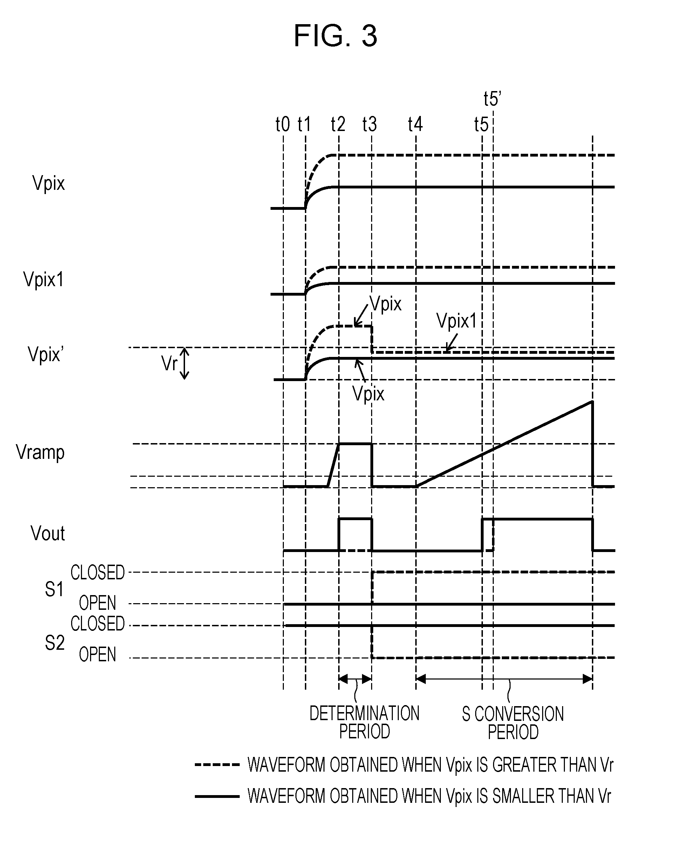

Next, operation according to the first embodiment will be described with reference to Fig. 3.

A broken line represents a case where an output Vpix of a certain amplifier 20-n is greater than a threshold described below, and a solid line represents a case where the output Vpix is smaller than the threshold.

At time t0, suppose that the output Vpix of the amplifier 20-n is zero. At time t0, the switch S1 is open and the switch S2 is closed. Thus, the output Vpix of the amplifier 20-n is supplied to a corresponding comparator 101 via the switch S2 and the input capacitor C1.

At time t1, the output Vpix of the amplifier 20-n starts to change and becomes statically determinate at time t2.

Meanwhile, the value of the reference signal Vramp becomes statically determinate to a threshold Vr by time t2. In a determination period from time t2 to time t3, if the output Vpix exceeds the threshold Vr, an output Vout of the comparator 101 remains at an L level as illustrated by a broken line. As a result, the determination circuit 102 opens the switch S2 and closes the switch S1. That is, switching is performed such that the output Vpix of the amplifier 20-n is attenuated by the attenuator 103 and is supplied to the comparator 101. If the output Vpix is smaller than the threshold Vr, the output Vout of the comparator 101 becomes an H level as illustrated by a solid line. In this case, the states of the switches S1 and S2 are unchanged from time t0. That is, in the case where the output Vpix is smaller than the threshold Vr, a signal amplified with a first gain is supplied to the comparator 101, and in the case where the output Vpix is greater than the threshold Vr, a signal amplified with a second gain is supplied to the comparator 101. In the following, a signal amplified with a first gain is referred to as a first amplified signal and a signal amplified with a second gain is referred to as a second amplified signal. In the first embodiment, the first gain is 1 and the second gain is less than 1.

From time t4, the level of the reference signal Vramp starts to change monotonically. The timing generation circuit 13 causes the counter 50 to start a counting operation in response to a start of change of the reference signal Vramp.

The output Vout of the comparator 101 is switched from the L level to the H level at time t5' in the case where the output Vpix of the amplifier 20-n is greater than the threshold Vr or at time t5 in the case where the output Vpix of the amplifier 20-n is smaller than the threshold Vr. As a result of switching the output Vout of the comparator 101 to the H level, a count signal is held by the column memory 40-n. In this manner, the output Vpix of the amplifier 20-n is converted into a digital signal.

A digital signal obtained in this manner is transmitted to the signal processing circuit 65. Although not illustrated in the first embodiment, the column memory 40-n may hold, as a flag signal, a determination result obtained in the determination period. With the flag signal, the signal processing circuit 65 and other downstream circuits are able to recognize with which gain of the gain application unit GA the digital signal is amplified.

An image capturing apparatus described in Japanese Patent Laid-Open No. 2010-016416 generates two signals using amplifiers, the two signals resulting from amplification with a gain of 1 or more. Thus, it was desired that input dynamic ranges of circuits downstream of the amplifiers be wide.

In contrast, according to the first embodiment, both the first and second amplified signals are amplified with a gain of 1 or less. Consequently, in contrast to Japanese Patent Laid-Open No. 2010-016416, it is not necessary to widen an input dynamic range of a circuit downstream of an amplifier. Thus, the configuration of a circuit provided downstream of an amplifier may be prevented from being complicated to widen an input dynamic range.

In addition, as shown in Japanese Patent Laid-Open No. 2010-016416, in the case where switching of gains is performed in a sequential manner in an amplifier that includes an operational amplifier, since an operational amplifier is an active circuit, a time period until an output of the amplifier becomes statically determinate depends on the responsivity of the operational amplifier. In general, since lower power consumption is desired for image capturing apparatuses, it is not practical to increase power consumption so as to improve the responsivity of an operational amplifier.

In contrast, according to the first embodiment, even for a signal whose level exceeds a threshold, the gain application unit GA applies a gain to the signal using only passive elements. Thus, the operation speed of a photoelectric conversion device may be increased while preventing power consumption from increasing.

In the first embodiment, a signal level of an analog signal is determined in the determination period. Based on the determination result, switching of the gains of the gain application unit GA is performed. As a result, in contrast to a case where processing is performed without switching the gain in an S conversion period, the length of an S conversion period in the first embodiment may be shortened. Thus, the operation speed of an image capturing apparatus may further be increased. If the gain application unit GA attenuates the output Vpix of an amplifier 20-n to reduce the value by half, a range of change of the reference signal Vramp in the S conversion period may be reduced by half. Therefore, the length of the S conversion period may be reduced by half.

### Second Embodiment

In the following, differences between the first embodiment and a second embodiment will be mainly described. The description on portions in common with the first embodiment will be omitted.

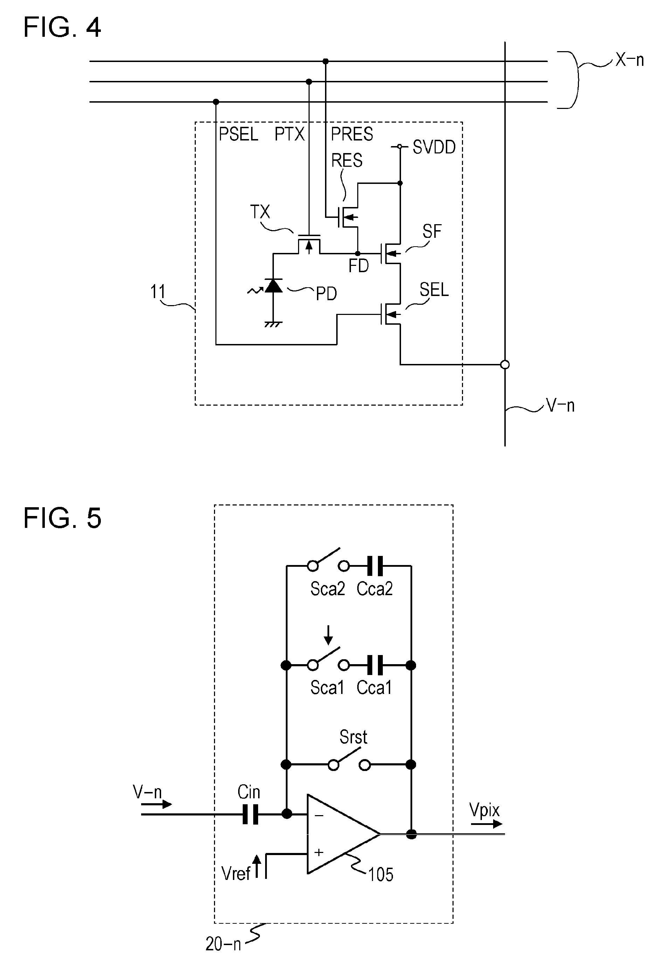

Fig. 4 is a diagram illustrating a pixel 11 according to the second embodiment. The pixel 11 includes a photodiode PD, an amplifying transistor SF, a transfer transistor TX, a reset transistor RES, and a select transistor SEL. The transfer transistor TX, the reset transistor RES, and the select transistor SEL are set to be conducting/nonconducting by signals PTX, PRES, and PSEL, respectively. The ground potential is applied to the anode of the photodiode PD. The cathode of the photodiode PD is connected to a floating diffusion portion FD via the transfer transistor TX. The gate of the amplifying transistor SF is connected to the floating diffusion portion FD and also to a power source SVDD via the reset transistor RES. One of main nodes of the amplifying transistor SF is connected to the power source SVDD, and the other main node is connected to an output node PIXOUT via the select transistor SEL.

Fig. 5 illustrates the configuration of an amplifier 20-n according to the second embodiment. The amplifier 20-n includes a differential amplifier 105, an input capacitor Cin, feedback capacitors Cca1 and Cca2, and switches Sca1, Sca2, and Srst. To a noninverting input node of the differential amplifier 105, a reference voltage Vref is applied. An inverting input node of the differential amplifier 105 is connected to a corresponding signal line V-n via the input capacitor Cin. The inverting input node and an output node of the differential amplifier 105 are connected to each other via the switch Srst; the switch Sca1 and the feedback capacitor Cca1; and the switch Sca2 and the feedback capacitor Cca2. Switching of the gains of the amplifier 20-n may be performed by controlling conduction states of the switches Sca1 and Sca2.

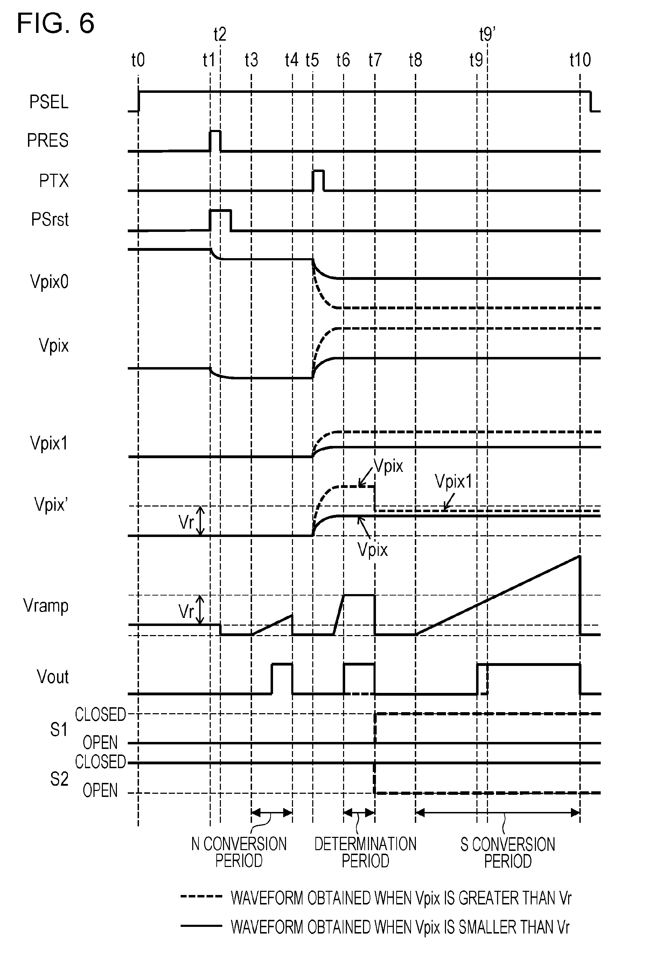

Operation according to the second embodiment will be described with reference to Fig. 6.

At time t0, the switch S1 is open and the switch S2 is closed. Thus, the output Vpix of the amplifier 20-n is supplied to a corresponding comparator 101 via the switch S2 and the input capacitor C1.

At time t0, the level of the signal PSEL becomes an H level and the select transistor SEL is switched on. As a result, the amplifying transistor SF operates as a source follower circuit together with a power source provided for the signal line V-n corresponding to the amplifier 20-n, not shown.

At time t1, the level of the signal PRES becomes an H level and the reset transistor RES is switched on. As a result, the floating diffusion portion FD is reset and the electric potential of the signal line V-n changes in response to the electric potential of the floating diffusion portion FD. The output of the pixel 11 at this time is a signal mainly including a noise component due to resetting of the floating diffusion portion FD.

At time t1, the level of a signal PSrst also becomes an H level, and the switch Srst in the amplifier 20-n is closed. As a result, input and output terminals of the differential amplifier 105 are short-circuited, and one of the nodes of the input capacitor Cin is reset by an output of the differential amplifier 105. Thereafter, when the level of the signal PSrst becomes an L level, an electric-potential difference between the noise component due to resetting of the floating diffusion portion FD and the output Vpix of the amplifier 20-n is held by the input capacitor Cin.

At time t2, a signal level of the reference signal Vramp is changed to a reference level.

At time t3, the signal level of the reference signal Vramp is changed at a predetermined rate with respect to time. The timing generation circuit 13 causes the counter 50 to start a counting operation in response to a start of change of the reference signal Vramp. Thereafter, when the value of the reference signal Vramp exceeds the output Vpix of the amplifier 20-n, the output Vout of the comparator 101 becomes the H level. When the output Vout becomes the H level, a count signal output from the counter 50 is held by a corresponding column memory 40-n. Here, the signal held by the column memory 40-n corresponds to noise due to the amplifier 20-n. In this manner, the noise due to the amplifier 20-n is converted into a digital signal.

At time t4, the change of the value of the reference signal Vramp is stopped and the value of the reference signal Vramp is returned to its initial value. Then, the output Vout of the comparator 101 changes to the L level.

At time t5, the level of the signal PTX is changed to an H level. As a result, the transfer transistor TX is switched on and the electric charge stored in the photodiode PD is transferred to the floating diffusion portion FD. The electric potential of the floating diffusion portion FD changes according to the amount of electric charge transferred to the floating diffusion portion FD. In response to this change in the electric potential of the floating diffusion portion FD, the electric potential of the signal line V-n also changes. Similarly, the output Vpix of the amplifier 20-n also changes. The output Vpix of the amplifier 20-n is a signal obtained by amplifying a signal obtained by reducing a noise component from the output of the pixel 11, the noise component being due to resetting of the floating diffusion portion FD. That is, ideally, a signal whose noise component due to the pixel 11 is eliminated is amplified.

At time t6, the level of the reference signal Vramp becomes statically determinate to the threshold Vr. If the output Vpix exceeds the threshold Vr, the output Vout of the comparator 101 remains at the L level as illustrated by a broken line. As a result, the determination circuit 102 opens the switch S2 and closes the switch S1. That is, the output Vpix of the amplifier 20-n is attenuated by the attenuator 103 and switching is performed such that the attenuated output Vpix is supplied to the comparator 101. If the output Vpix is smaller than the threshold Vr, the output Vout of the comparator 101 becomes the H level as illustrated by a solid line. In this case, the states of the switches S1 and S2 are unchanged from time t0.

From time t8, the level of the reference signal Vramp starts to change at a predetermined rate with respect to time. The timing generation circuit 13 causes the counter 50 to start a counting operation in response to a start of change of the reference signal Vramp.

The output Vout of the comparator 101 is switched from the L level to the H level at time t9' in the case where the output Vpix of the amplifier 20-n is greater than the threshold Vr and at time t9 in the case where the output Vpix of the amplifier 20-n is smaller than the threshold Vr. As a result of switching the output Vout of the comparator 101 to the H level, a count signal is held by the column memory 40-n. In this manner, the output Vpix of the amplifier 20-n is converted into a digital signal. A digital signal having a reduced amount of noise is obtained by performing processing at, for example, the signal processing circuit 65 on the difference between the digital signal held by the column memory 40-n in a period from time t3 to time t4 and the digital signal held at time t9 or time t9', the noise being due to the amplifier 20-n.

According to the second embodiment, the configuration of a circuit downstream of an amplifier may be prevented from being complicated.

Furthermore, according to the second embodiment, as in the first embodiment, even for a signal whose level exceeds a threshold, a portion that contributes to application of a gain to an analog signal in the gain application unit GA is constituted only by passive elements. Thus, the operation speed of a photoelectric conversion device may be increased while preventing power consumption from increasing.

Furthermore, according to the second embodiment, since the amount of noise due to resetting the floating diffusion portion FD and that of noise due to the amplifier 20-n may be reduced, a signal having a high S/N ratio may be obtained.

### Third Embodiment

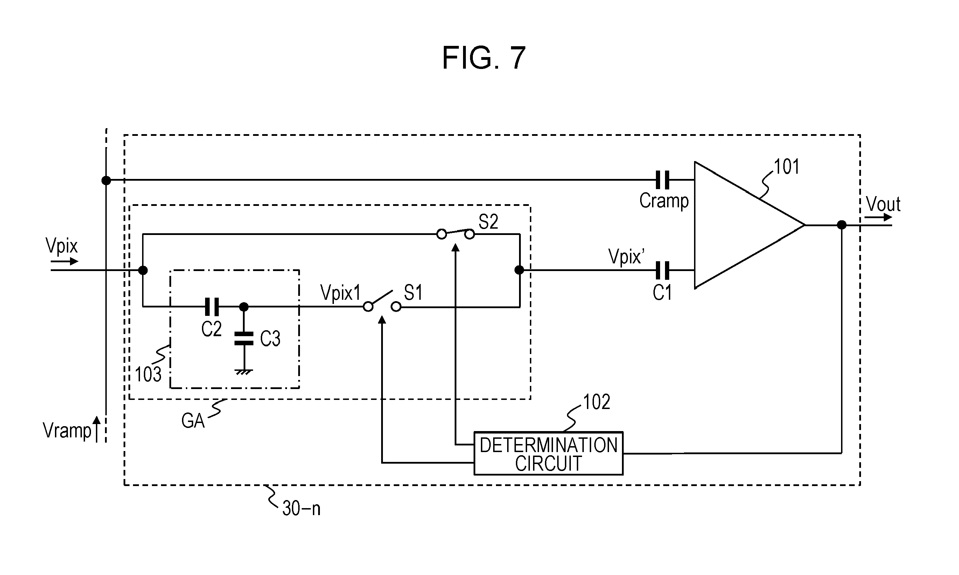

Fig. 7 is a diagram illustrating the configuration of a column comparing unit 30-n according to a third embodiment. The third embodiment is different from the first and second embodiments in that the attenuator 103 includes two capacitors C2 and C3. The description of portions in common with the above-described embodiments will be omitted.

One of nodes of the capacitor C2, which is a first capacitive element, is connected to a corresponding analog signal output unit. The other node is connected to one of nodes of the capacitor C3, which is a second capacitive element, and the switch S1. A fixed electric potential is applied to the other node of the capacitor C3. With such a configuration, the gain of the attenuator 103 is determined using the ratio between the capacitances of the capacitors C2 and C3.

With the configuration of the attenuator 103 according to the third embodiment, it is necessary to temporarily close the switch S1 before time t2 in Fig. 6 in order to reset the capacitors C2 and C3. Except for this point, the same operation as that illustrated in Fig. 6 may be executed.

### Fourth Embodiment

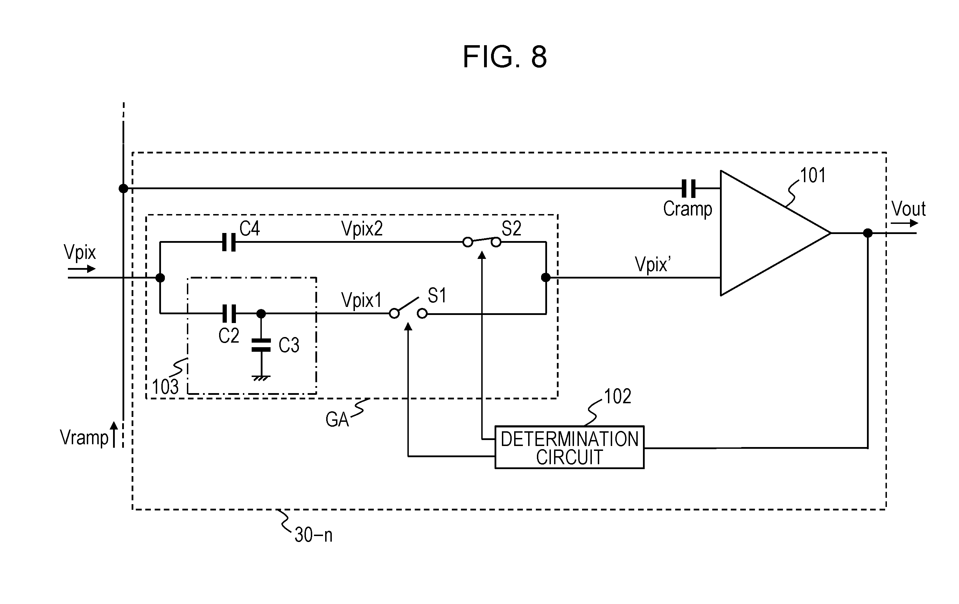

Fig. 8 is a diagram illustrating the configuration of a column comparing unit 30-n according to a fourth embodiment. The fourth embodiment is different from the third embodiment in that the gain application unit GA does not include the input capacitor C1 but includes a capacitor C4.

The operation of a photoelectric conversion device according to the fourth embodiment may be the same as that of a photoelectric conversion device according to the third embodiment.

### Fifth Embodiment

A fifth embodiment will be described.

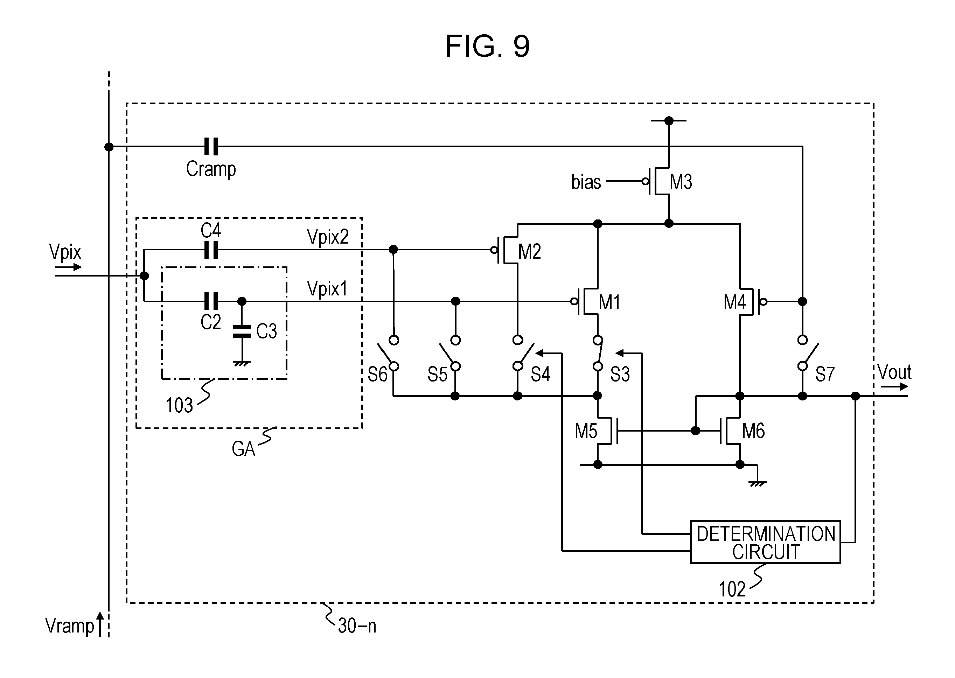

Fig. 9 is a diagram illustrating the configuration of a column comparing unit 30-n according to the fifth embodiment. The column comparing unit 30-n according to the fifth embodiment is different from that illustrated in Fig. 8 in that the configuration used to perform switching between a path through which the output Vpix of the amplifier 20-n is supplied to the comparator 101 via the capacitor C4 and a path through which the output Vpix of the amplifier 20-n is supplied to the comparator 101 via the capacitor C2 is shared by the comparator 101 and the gain application unit GA. The description of portions in common with the above-described embodiments will be omitted.

The comparator 101 includes transistors M1 to M6. The transistor M1 and the transistor M4 constitute a differential pair, the transistor M1 being a first input transistor and the transistor M4 being a second input transistor. The transistor M2 and the transistor M4 also constitute a differential pair, the transistor M2 being a third input transistor. The transistors M1 and M2 are connected in parallel to each other. The transistor M3 functions as a tail current source for the differential pairs. The transistors M5 and M6 function as current sources for the transistors M1, M2, and M4. One of main nodes of the transistor M1 is connected to the transistor M5 via a switch S3 and the other main node is connected to the transistor M3. A control node of the transistor M1 is connected to a common contact between the capacitors C2 and C3, to an input terminal of the column comparing unit 30-n via the capacitor C2, and to a common node between the transistor M5 and the switch S3 via a switch S5. One of main nodes of the transistor M2 is connected to the transistor M5 via a switch S4 and the other main node is connected to the transistor M3. A control node of the transistor M2 is connected to an input terminal of the column comparing unit 30-n via the capacitor C4 and to a common node between the transistor M5 and the switch S3 via a switch S6. One of main nodes of the transistor M4 is connected to the transistor M3 and the other main node is connected to the transistor M6. A control node of the transistor M4 is connected to, via the input capacitor Cramp, a wiring line through which the reference signal Vramp is supplied, to the other main node of the transistor M4 via a switch S7, and to the transistor M6 and an output node of the column comparing unit 30-n. The switches S3 and S4 are controlled by the determination circuit 102.

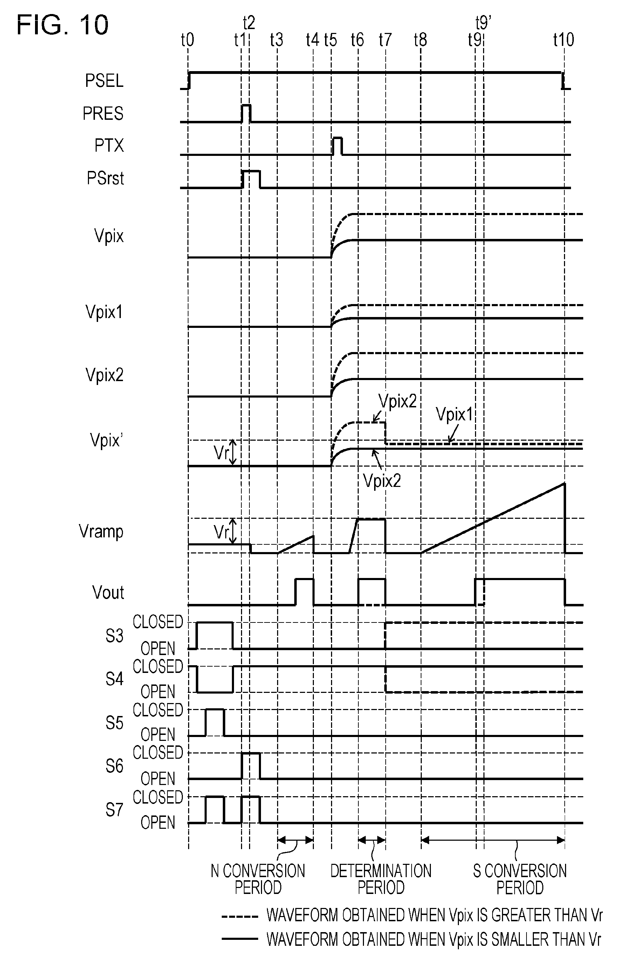

With reference to Fig. 10, an operation of a photoelectric conversion device according to the fifth embodiment will be described.

The operation illustrated in Fig. 10 is different from that illustrated in Fig. 6 in that the operation of the switches S1 and S2 is not included and operation of the switches S3 to S7 is included. Here, the description of the same portions as those in Fig. 6 is omitted and only the portions that are different from those in Fig. 6 will be described.

The capacitors C2 to C4 are reset in a period from time t0 to time t1, after the level of the signal PSEL becomes the H level at time t0.

First, the switch S3 is closed and the switch S4 is opened. As a result, the transistors M1 and M5 are electrically connected to each other and the transistors M1 and M4 constitute an active differential pair for the comparator 101.

Next, the switches S5 and S7 are closed. As a result, the electric potential of the capacitor C2 and that of the capacitor C3 are reset to the electric potential of the common node between the switch S3 and the transistor M5. In addition, the electric potential of one of nodes of the input capacitor Cramp is reset to the electric potential of a common contact between the transistors M4 and M6.

Next, the switch S3 is opened and the switch S4 is closed. As a result, switching is performed such that the transistors M2 and M4 become the active differential pair for the comparator 101.

Next, the switches S6 and S7 are closed. As a result, the electric potential of a capacitor C6 is reset to the electric potential of a common contact between the switch S4 and the transistor M5. In addition, the electric potential of the one of the nodes of the input capacitor Cramp is reset to the electric potential of the common contact between the transistors M4 and M6 again.

Thereafter, since the switch S4 is closed until the determination period ends at time t7, the output Vpix of the amplifier 20-n may be input to the comparator 101 via the capacitor C4. That is, as in the operation illustrated in Fig. 6, the output Vpix of the amplifier 20-n is supplied to the comparator 101 via a path with a higher gain between the two paths.

In the determination period, in the case where the output Vpix of the amplifier 20-n is smaller than the threshold Vr, the switch S3 remains open and the switch S4 remains closed as illustrated by solid lines. In contrast, in the case where the output Vpix of the amplifier 20-n exceeds the threshold Vr, the switch S4 is opened and the switch S3 is closed as illustrated by broken lines. As a result, the output Vpix of the amplifier 20-n is supplied to the comparator 101 via the attenuator 103 that includes the capacitors C2 and C3.

Also with the fifth embodiment, a gain is applied to a signal to be input to the comparator 101, using only passive elements. Thus, the operation speed of a photoelectric conversion device may be increased while preventing power consumption from increasing.

In the fifth embodiment, before resetting of the capacitor C4, the capacitors C2 and C3 are reset; however, such resetting may be performed in reverse order. Note that, in that case, after the capacitors C2 and C3 have been reset, it is necessary to set one of differential pairs as the active differential pair. In terms of increasing an operation speed, the operation illustrated in Fig. 10 is more advantageous than resetting the capacitors C4 prior to resetting the capacitors C2 and C3.

### Sixth Embodiment

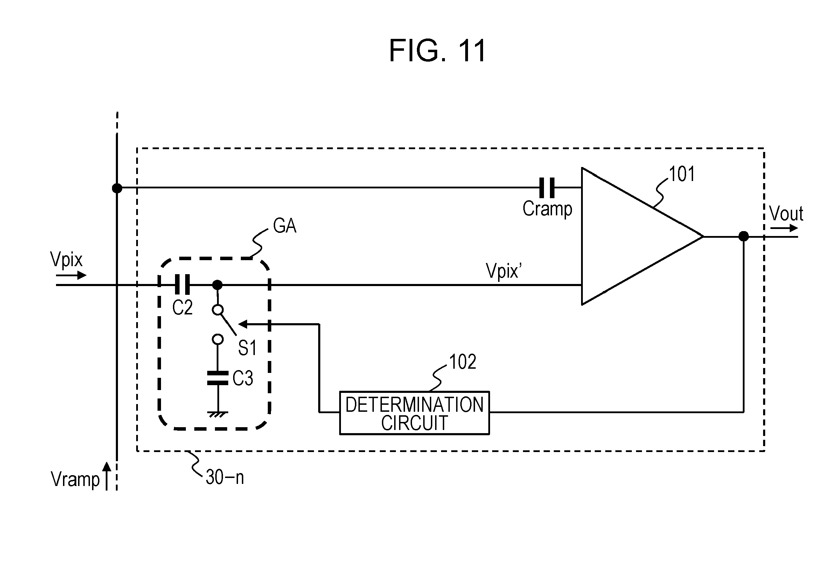

Fig. 11 is a diagram illustrating the configuration of a column comparing unit 30-n according to a sixth embodiment. The column comparing unit 30-n illustrated in Fig. 8 is configured such that one of the input nodes of the comparator 101 is connected to one of the input nodes of the column comparing unit 30-n via two paths that are switched between using the switches S1 and S2. In contrast, in the sixth embodiment, there is just one path between one of the input nodes of the comparator 101 and one of the input nodes of the column comparing unit 30-n. In the sixth embodiment, the column comparing unit 30-n has a configuration in which there is no path that bypasses the attenuator 103 and switching of gains is performed. The description of portions in common with the above-described embodiments will be omitted.

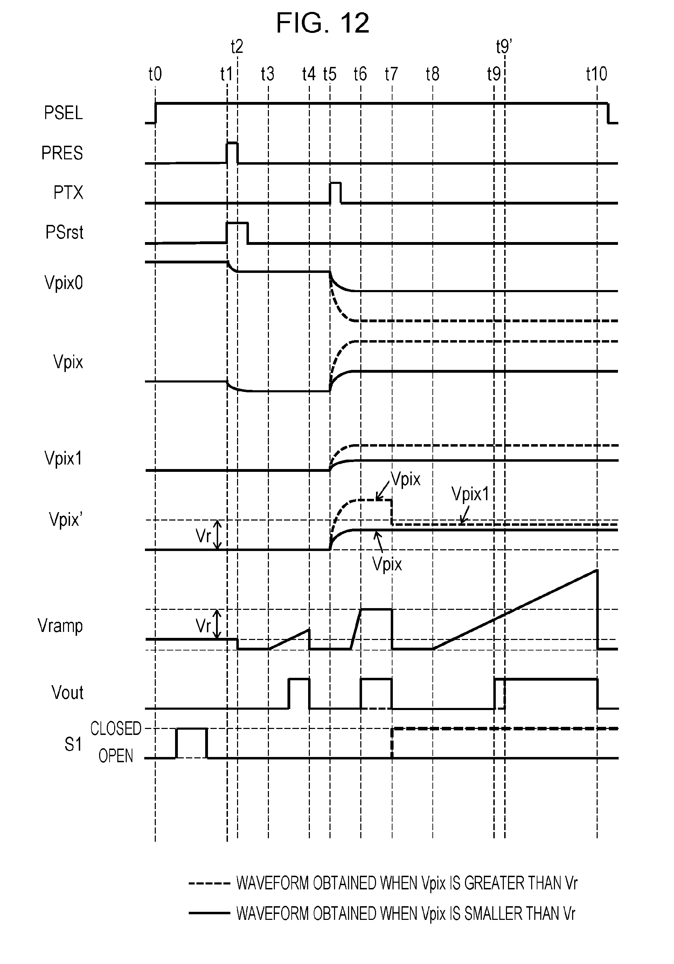

Fig. 12 is a timing diagram used to describe operation according to the sixth embodiment. The timing diagram illustrated in Fig. 12 is different from that illustrated in Fig. 6 in that the switch S1 is temporarily closed during a time period from time t0 to time t1. By closing the switch S1, the capacitors C2 and C3 are reset. The operation illustrated in Fig. 12 may be the same as that illustrated in Fig. 6, except for the operation of the switch S1.

According to the sixth embodiment, while the power consumption is prevented from being increased, the operation speed of a photoelectric conversion device may be increased. Furthermore, since the path from the amplifier 20-n to the comparator 101 is simplified, a photoelectric conversion device may be miniaturized.

### Seventh Embodiment

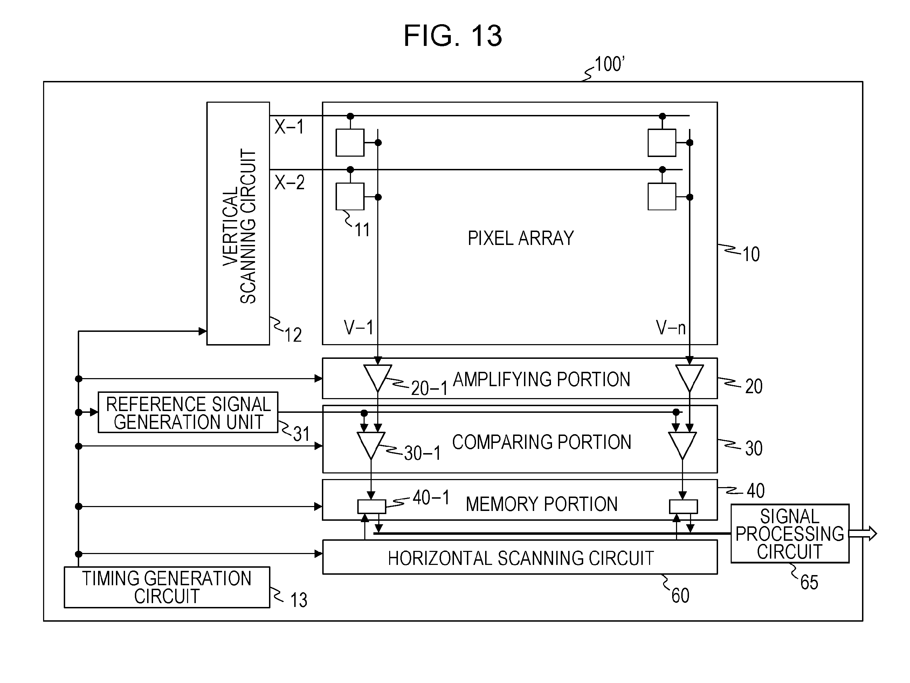

Fig. 13 is a diagram illustrating the configuration of a photoelectric conversion device 100' according to a seventh embodiment. The photoelectric conversion device 100' illustrated in Fig. 13 is different from the photoelectric conversion device 100 illustrated in Fig. 1 in that the counter 50 is omitted. The description of portions in common with the above-described embodiments will be omitted.

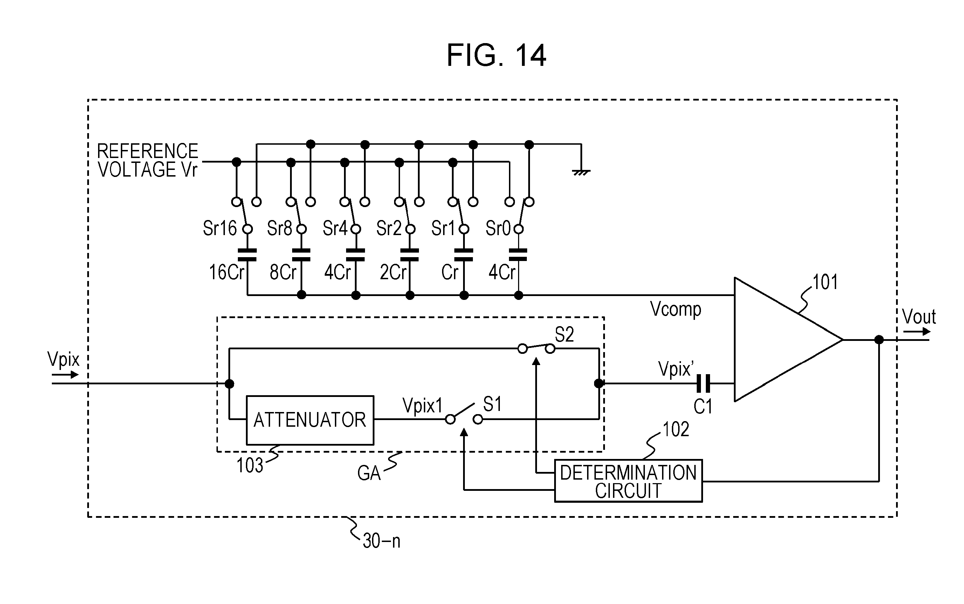

Fig. 14 is a diagram illustrating the configuration of a column comparing unit 30-n according to the seventh embodiment. The column comparing unit 30-n illustrated in Fig. 14 is different from that illustrated in Fig. 2 in that a comparison voltage generation unit 104 is included. The configuration between the other input node of the comparator 101 and an output terminal of the amplifier 20-n is the same as that illustrated in Fig. 2.

The comparison voltage generation unit 104 includes a plurality of capacitors arranged in parallel to each other and switches each of which is arranged in series with a corresponding one of the capacitors. Each of the capacitors is selectively connected to a terminal for a ground voltage GND or a terminal for a reference voltage Vr1 (hereinafter also referred to as a threshold Vr1) via a corresponding one of the switches. Here, an example is illustrated in which six capacitors are arranged in parallel to each other and the capacitances of the capacitors are 16Cr, 8Cr, 4Cr, 2Cr, Cr, and 4Cr from the left in the drawing. In the seventh embodiment, the reference signal generation unit 31 applies the reference voltage Vr1 to the column comparing unit 30-n of each of the columns. By switching connection terminals for each of the plurality of capacitors having capacitances of 16Cr, 8Cr, 4Cr, 2Cr, Cr, and 4Cr by using a corresponding one of the switches, the column comparing unit 30-n operates as a successive approximation AD converter.

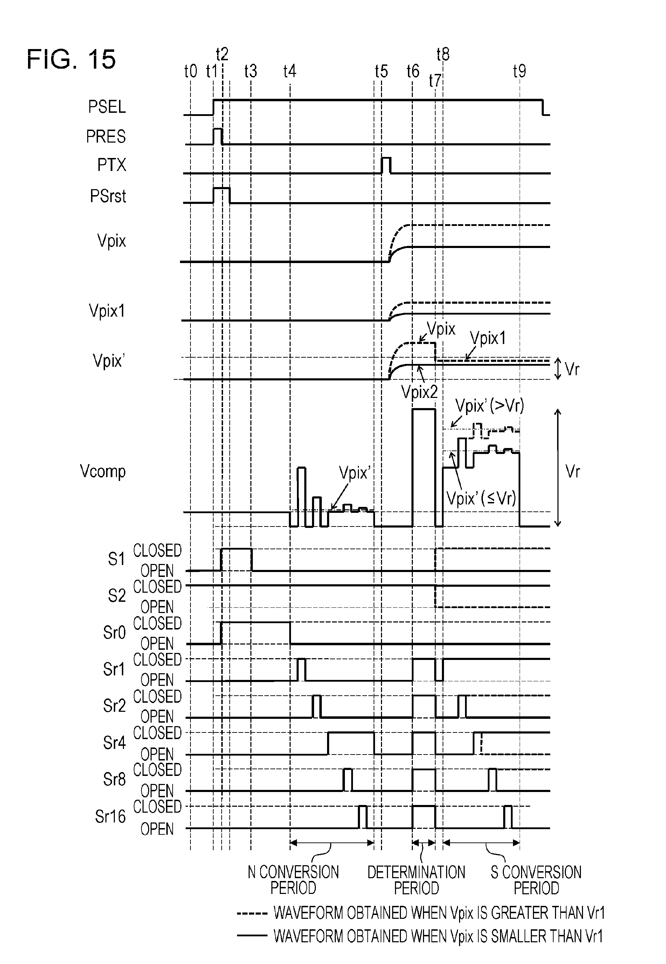

Operation according to the seventh embodiment will be described with reference to Fig. 15.

At time t0, the levels of all the signals PSEL, PRES, PTX, and PSrst are at an L level. Thus, the output Vpix of the amplifier 20-n is also at the L level.

In addition, at time t0, the switch S2 is in a closed state and switches S1, Sr0, Sr1, Sr2, Sr4, Sr8, and Sr16 are in an open state. Here, for each of the switches Sr0, Sr1, Sr2, Sr4, Sr8, and Sr16, an open state refers to a state in which the ground potential is applied to a capacitor corresponding to the switch, and a closed state refers to a state in which the reference voltage Vr1 is applied to the capacitor corresponding to the switch.

The following description is made for a case where each amplifier 20-n of the amplifying portion 20 has a configuration illustrated in Fig. 5.

At time t1, the level of the signal PSEL becomes the H level and the select transistor SEL is switched on. As a result, the amplifying transistor SF operates as a source follower circuit together with a power source provided for the signal line V-n corresponding to the amplifier 20-n, not shown.

At time t1, the level of the signal PRES becomes the H level and the reset transistor RES is switched on. As a result, the floating diffusion portion FD is reset and the electric potential of the signal line V-n changes in response to the electric potential of the floating diffusion portion FD. The output of the pixel 11 at this time is a signal mainly including a noise component due to resetting of the floating diffusion portion FD.

At time t1, the level of the signal PSrst also becomes the H level, and the switch Srst in the amplifier 20-n is closed. As a result, the input and output terminals of the differential amplifier 105 are short-circuited, and one of the nodes of the input capacitor Cin is reset by an output of the differential amplifier 105. Thereafter, when the level of the signal PSrst becomes the L level, an electric-potential difference between the noise component due to the resetting of the floating diffusion portion FD and the output Vpix of the amplifier 20-n is held by the input capacitor Cin.

At time t3, the switch S1 enters the open state and only a signal that does not flow via the attenuator 103 is supplied to the comparator 101 via the input capacitor C1.

At time t4, the switch Sr0 enters the open state and the ground potential is applied to the capacitor corresponding to the switch Sr0.

After the switch Sr0 enters the open state at time t4, an AD conversion period starts. In the AD conversion period, switching is performed successively for the switches Sr1, Sr2, Sr4, Sr8, and Sr16 in a sequential manner and an analog signal supplied to the comparator 101 is converted into a digital signal. The operation here is similar to that performed by a known successive approximation AD converter, and thus a detailed description will be omitted. Through operation performed in an N conversion period, noise due to the amplifier 20-n is converted into a digital signal.

At time t5, the level of the signal PTX is changed to the H level. As a result, the transfer transistor TX is switched on and electric charge accumulated in the photodiode PD is transferred to the floating diffusion portion FD. The electric potential of the floating diffusion portion FD changes according to the amount of electric charge transferred to the floating diffusion portion FD. In response to this change in the electric potential of the floating diffusion portion FD, the electric potential of the signal line V-n also changes. Similarly, the output Vpix of the amplifier 20-n also changes. The output Vpix of the amplifier 20-n is a signal obtained by amplifying a signal obtained by reducing a noise component from the output of the pixel 11, the noise component being due to resetting of the floating diffusion portion FD. That is, ideally, a signal whose noise component due to the pixel 11 is eliminated is amplified.

At time t6, the switches Sr1, Sr2, Sr4, Sr8, and Sr16 enter the closed state. Here, suppose that the threshold Vr is applied to one of the input nodes of the comparator 101. In a determination period until time t7, the threshold Vr and the output Vpix of the amplifier 20-n are compared with each other, the output Vpix being supplied to the other input node of the comparator 101.

In the determination period, a dotted line represents a case where the output Vpix exceeds the threshold Vr, and a solid line represents a case where the output Vpix is smaller than the threshold Vr. In Fig. 15, in the case where the output Vpix is equal to the threshold Vr, the switches are operated in the same way as in the case where the output Vpix is smaller than the threshold Vr; however, the switches may be operated instead in the same way as in the case where the output Vpix exceeds the threshold Vr.

In the case where the output Vpix exceeds the threshold Vr1, the switch S1 enters the closed state and the switch S2 enters the open state. As a result, the output Vpix of the amplifier 20-n is attenuated by the attenuator 103 and the resulting signal, which is a second amplified signal, is supplied to the comparator 101.

In contrast, in the case where the output Vpix is smaller than the threshold Vr1, the conduction states of the switches S1 and S2 are maintained.

From time t8 after the switches Sr1, Sr2, Sr4, Sr8, and Sr16 enter the open state, an S conversion period starts. In the S conversion period, a digital signal is obtained by performing operation similar to that of a known successive approximation AD converter.

A digital signal having a reduced amount of noise is obtained by performing processing on the difference between the digital signal obtained in the N conversion period and the digital signal obtained in the S conversion period, the noise being due to the amplifier 20-n.

According to the seventh embodiment, the configurations of circuits downstream of an amplifier may be prevented from being complicated.

Furthermore, according to the seventh embodiment, as in the first embodiment, even for a signal whose level exceeds a threshold, the portion of the attenuator 103 that contributes to application of a gain to a signal is constituted only by passive elements. Thus, the operation speed of a photoelectric conversion device may be increased while preventing power consumption from increasing.

Furthermore, according to the seventh embodiment, since the amount of noise due to resetting of the floating diffusion portion FD and that of noise due to the amplifier 20-n may be reduced, a signal having a high S/N ratio may be obtained.

### Eighth Embodiment

In the above-described embodiments, a portion that contributes to application of a gain to a signal in the attenuator 103 was constituted only by passive elements, the attenuator 103 being included in the gain application unit GA. In contrast, in an eighth embodiment, the attenuator 103 that includes an active element is used.

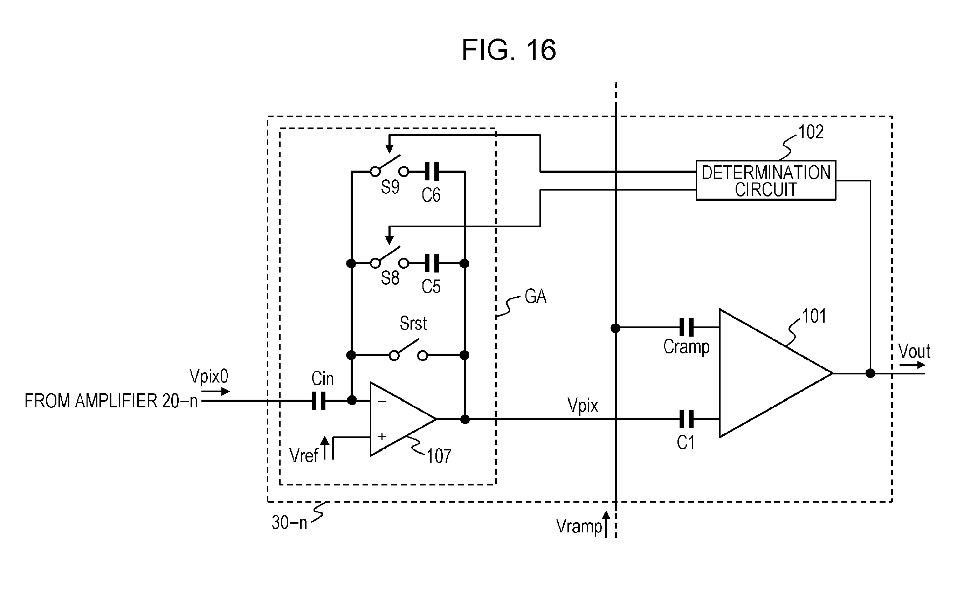

Fig. 16 illustrates the configuration of a column comparing unit 30-n according to the eighth embodiment. The column comparing unit 30-n illustrated in Fig. 16 is different from that illustrated in Fig. 2 in that an amplifier whose gain is variable is included.

An output terminal of the amplifier 20-n is connected to an inverting input node of a differential amplifier 107 via the input capacitor Cin. The differential amplifier 107 has three feedback paths between the inverting input node and an output node. Two of the three paths are a path that has a switch S8 and a capacitor C5 and a path that has a switch S9 and a capacitor C6. The gain of the differential amplifier 107 is switched, together with the input capacitor Cin, by selectively conducting the two paths as an active feedback path. The other feedback path is a path that has the switch Srst. The switches S8 and S9 are controlled by the determination circuit 102 in response to an output Vout of the comparator 101.

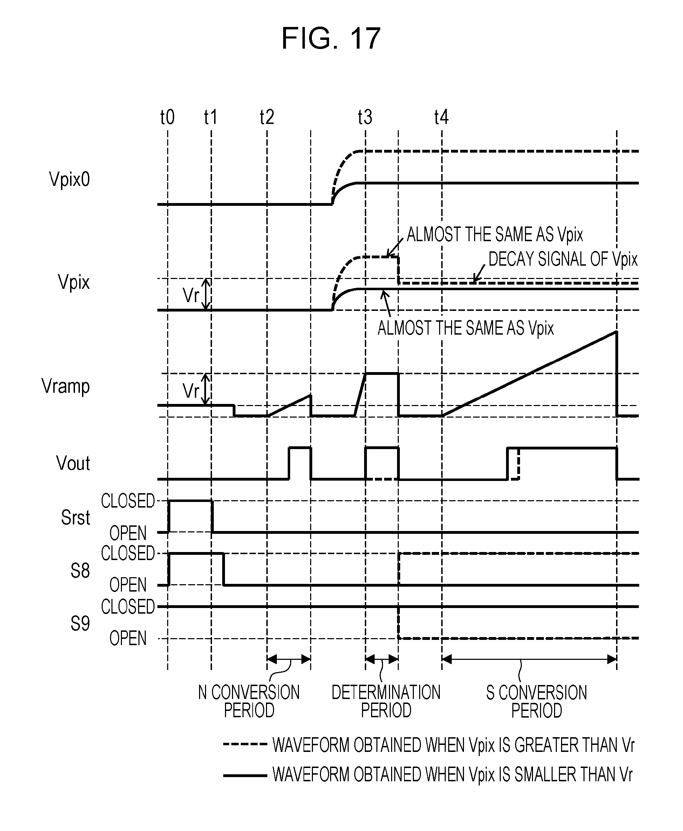

Operation according to the eighth embodiment will be further described with reference to Fig. 17. In the following, suppose that the capacitance of the capacitor C5 is greater than that of the capacitor C6. The operation performed in the portion from the pixel 11 to the amplifier 20-n is similar to that performed in the other embodiments. Thus, the description will be omitted here.

At time t0, suppose that an output Vpix0 of the amplifier 20-n is zero. At time t0, the switches Srst, S8, and S9 are closed. As a result, signals held in the capacitors C5 and C6 are reset.

At time t1, the switch Srst is opened and thereafter the switch S8 is opened. As a result, only the path that has the switch S9 and the C6 becomes active among the feedback paths of the differential amplifier 107. Consequently, the gain by which the gain application unit GA applies to an analog signal is determined by the capacitance ratio between the input capacitor Cin and the capacitor C6. The capacitance of the input capacitor Cin and that of the C6 are set such that a gain of 1 or less is achieved here.

In an N conversion period that starts at time t2, a reference signal output by resetting the amplifier 20-n is converted from analog to digital.

After the operation in the N conversion period ends and before a determination period starts, the output Vpix0 of the amplifier 20-n changes and becomes statically determinate by time t3. The value of the reference signal Vramp also becomes statically determinate to the threshold Vr by time t3.

In the determination period, which starts at time t3, the comparator 101 compares an output Vpix of the gain application unit GA with the threshold Vr. In the case where the output Vpix of the gain application unit GA is greater than the threshold Vr, the switch S8 is closed as illustrated by a dotted line and furthermore the switch S9 is opened. As a result, only the path that has the switch S8 and the capacitor C5 is active among the feedback paths of the differential amplifier 107. Since the capacitance of the capacitor C5 is greater than that of the capacitor C6, the gain of the differential amplifier 107 becomes smaller. In contrast, in the case where the output Vpix of the gain application unit GA is smaller than the threshold Vr, the switch S9 is kept closed as illustrated by a solid line.

As described above, after the gain of the differential amplifier 107 is set by performing processing in the determination period, an operation in an S conversion period is performed from time t4.

According to the eighth embodiment, both first and second amplified signals are amplified with a gain of 1 or less. Thus, in contrast to Japanese Patent Laid-Open No. 2010-016416, it is not necessary to widen an input dynamic range of a circuit provided downstream of an amplifier. Thus, the configuration of a circuit provided downstream of an amplifier to widen an input dynamic range may be prevented from being complicated.

### Ninth Embodiment

The column comparing unit 30-n illustrated in the eighth embodiment generates first and second amplified signals using a single gain-variable amplifier. However, first and second amplified signals may be generated using two amplifiers.

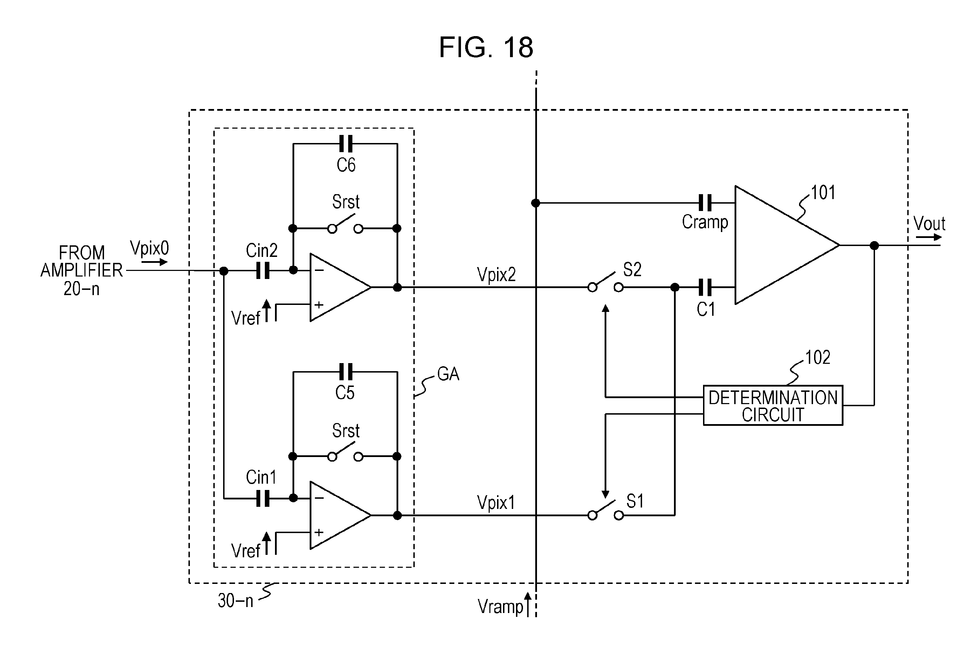

A column comparing unit 30-n according to a ninth embodiment illustrated in Fig. 18 is different from that illustrated in the eighth embodiment in that amplifiers that apply different gains from each other are included.

Operation according to the ninth embodiment may be the same as that illustrated in Fig. 6 except that the switch Srst is closed in a period from time t0 to time t1 and the capacitors C5 and C6 are reset. Here, suppose that the gain of an amplifier in which the capacitor C6 serves as a feedback capacitor is 1 or less and is greater than the gain of an amplifier in which the capacitor C5 serves as a feedback capacitor.

According to the ninth embodiment, both first and second amplified signals are amplified with a gain of 1 or less. Thus, in contrast to Japanese Patent Laid-Open No. 2010-016416, it is not necessary to widen an input dynamic range of a circuit provided downstream of an amplifier. Consequently, the configuration of a circuit provided downstream of an amplifier to widen an input dynamic range may be prevented from being complicated.

In the configuration illustrated in Fig. 18, two amplifiers are provided; however, one of the two amplifiers may be replaced with an attenuator in which a portion that contributes to application of a gain to an analog signal is constituted only by passive elements as illustrated in, for example, Fig. 7.

### Tenth Embodiment

In the above-described embodiments, the determination circuit 102 controls switches upon receiving the output Vout from the comparator 101. In a tenth embodiment, a configuration will be described in which the determination circuit 102 controls switches upon receiving an output of a comparator 108 that is different from the comparator 101.

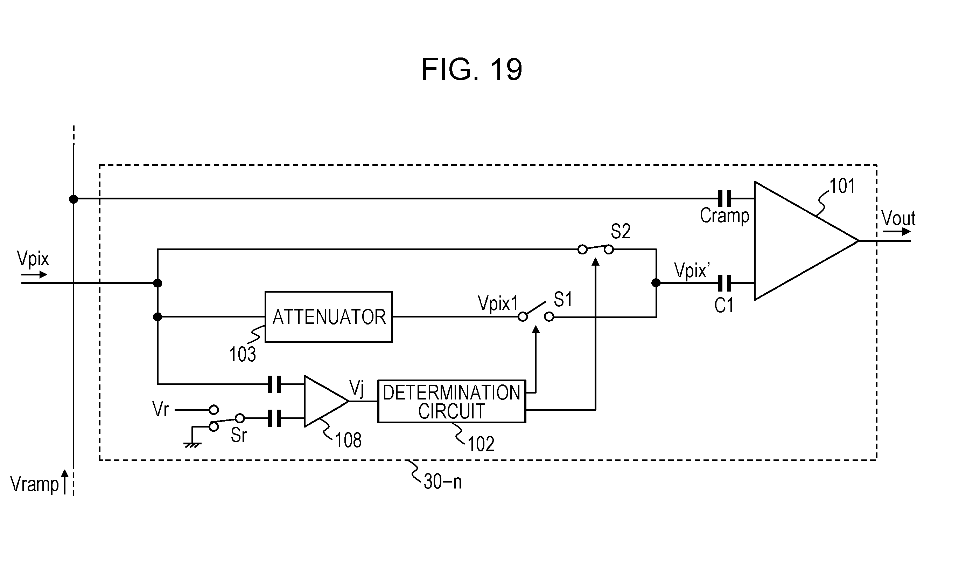

Fig. 19 illustrates the configuration of a column comparing unit 30-n according to the tenth embodiment. The gain application unit GA in the tenth embodiment has the same configuration as the gain application unit GA of the column comparing unit 30-n illustrated in Fig. 2. In the tenth embodiment, the column comparing unit 30-n illustrated in Fig. 19 is different from that illustrated in Fig. 2 in that the comparator 108 and the determination circuit 102 are provided in parallel to the gain application unit GA. In other words, a difference between the tenth embodiment and the above-described embodiments is that an output of the gain application unit GA is compared with a threshold in the above-described embodiments but an input to the gain application unit GA is compared with a threshold in the tenth embodiment. The threshold Vr or the ground potential is selectively applied to one of input nodes of the comparator 108 via a switch Sr.

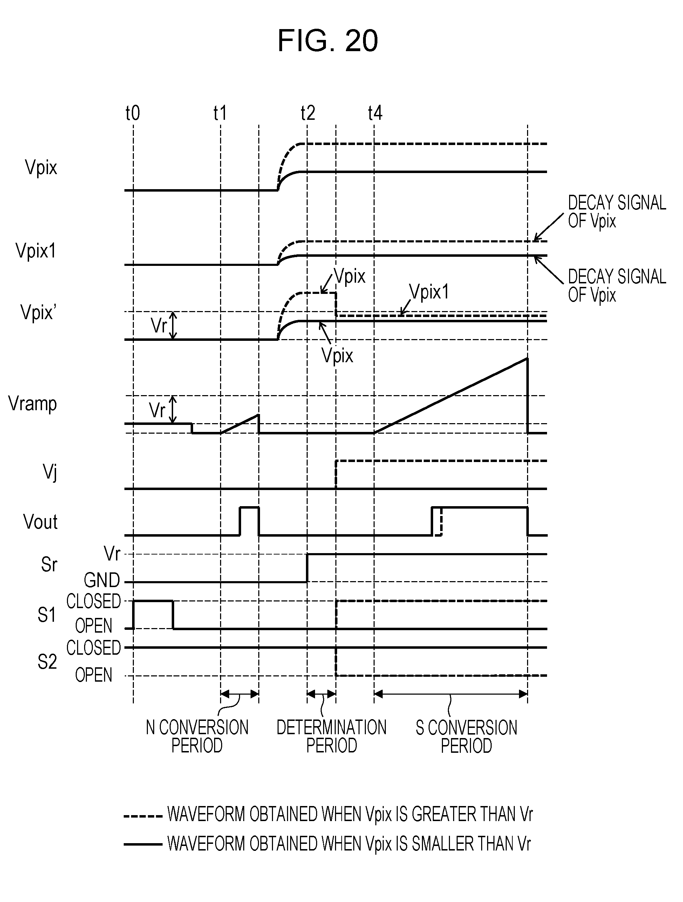

Operation according to the tenth embodiment will be further described with reference to Fig. 20. The operation performed between the pixel 11 and the amplifier 20-n is similar to that performed in the other embodiments. Thus, the description will be omitted here.

Suppose that the output Vpix of the amplifier 20-n is zero at time t0. In addition, the switch Sr is connected to a terminal for the ground potential at time t0 and the switch S2 is closed. The switch S1 is temporarily closed from time t0 and thereafter the switch S1 is opened again. In this state, before time t1 at which an N conversion period starts, an input node of the comparator 108 is reset by a resetting unit that is not shown.

A reference signal output by resetting the amplifier 20-n is converted from analog to digital in the N conversion period.

After the operation in the N conversion period ends and before a determination period starts, the output Vpix of the amplifier 20-n changes and becomes statically determinate by time t2. The value of the reference signal Vramp also becomes statically determinate to the threshold Vr by time t2.

In the determination period, which starts at time t2, the switch Sr is first connected to a terminal for the threshold Vr. Here, the output Vpix of the amplifier 20-n is compared with the threshold Vr by the comparator 108.

In the case where the output Vpix of the amplifier 20-n is greater than the threshold Vr, the switch S1 is closed as illustrated by a dotted line and furthermore the switch S2 is opened. As a result, the output Vpix of the amplifier 20-n is multiplied by a gain of less than 1 by the attenuator 103 and the resulting signal, which is a second amplified signal, is supplied to the comparator 101. In contrast, in the case where the output Vpix of the amplifier 20-n is smaller than the threshold Vr, the switch S2 is kept closed as illustrated by a solid line.

As described above, after the gain of the gain application unit GA is set by performing processing in the determination period, an operation in an S conversion period is performed from time t4.

According to the tenth embodiment, both first and second amplified signals are amplified with a gain of 1 or less. Thus, in contrast to Japanese Patent Laid-Open No. 2010-016416, it is not necessary to widen an input dynamic range of a circuit provided downstream of an amplifier. Consequently, the configuration of a circuit provided downstream of an amplifier to widen an input dynamic range may be prevented from being complicated.

### Eleventh Embodiment

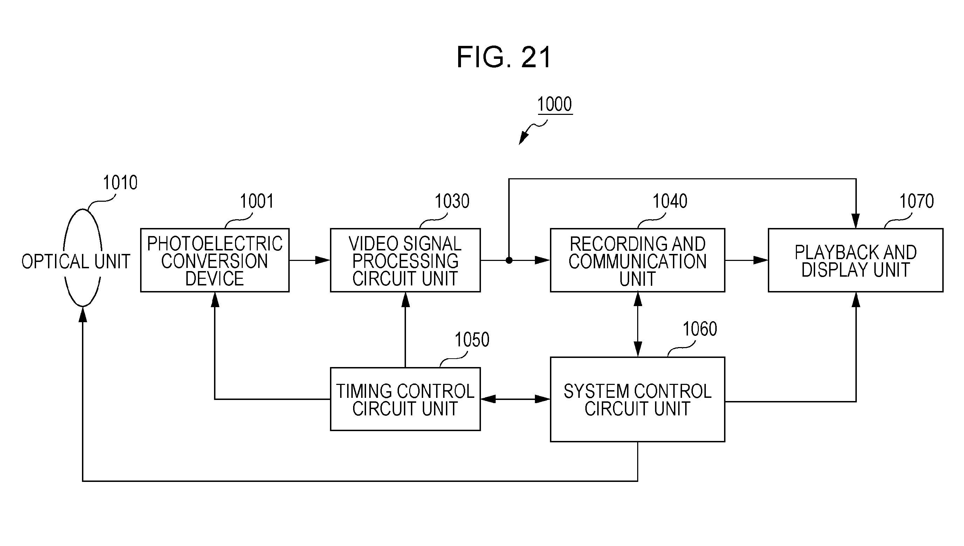

An image pickup system according to an eleventh embodiment will be described using Fig. 21.

An image pickup system 1000 includes, for example, an optical unit 1010, a photoelectric conversion device 1001, a video signal processing circuit unit 1030, a recording and communication unit 1040, a timing control circuit unit 1050, a system control circuit unit 1060, and a playback and display unit 1070. The image pickup system 1000 may be operated at least in one of an addition mode and a non-addition mode and may set one of the modes.

As the photoelectric conversion device 1001, any of the photoelectric conversion devices 100 described in the above-described embodiments may be used.

The optical unit 1010, which is an optical system such as lenses, forms an image of an object, with light reflected by the object, on a pixel array in which a plurality of pixels are two-dimensionally arranged. The photoelectric conversion device 1001 outputs a signal based on the light, with which the image of the object has been formed on the pixel array, at a timing in response to a signal supplied from the timing control circuit unit 1050. The timing generation circuit 13 that the photoelectric conversion device 1001 includes may be omitted and the timing control circuit unit 1050 may be configured to generate a signal that the photoelectric conversion device 1001 needs to operate.

A signal output from the photoelectric conversion device 1001 is input to the video signal processing circuit unit 1030, which is a video signal processing unit. The video signal processing circuit unit 1030 performs processing such as correction on an input electric signal in a method determined by a program or the like. A signal obtained by performing processing in the video signal processing circuit unit 1030 is transmitted to the recording and communication unit 1040 as image data. The recording and communication unit 1040 transmits a signal used to form an image to the playback and display unit 1070 and causes the playback and display unit 1070 to play back or display a moving image or a still image. In addition, the recording and communication unit 1040 performs communication with the system control circuit unit 1060 upon receiving a signal from the video signal processing circuit unit 1030 and furthermore records a signal used to form an image on a recording medium, which is not shown.

The system control circuit unit 1060 performs central control on operation of the image pickup system 1000. The system control circuit unit 1060 controls driving of the optical unit 1010, the timing control circuit unit 1050, the recording and communication unit 1040, and the playback and display unit 1070. In addition, the system control circuit unit 1060 includes a storage device, which is not illustrated and an example of which is a recording medium, and a program and the like that are necessary to control operation of the image pickup system 1000 are stored in the storage device. In addition, the system control circuit unit 1060 supplies, in response to a user operation as an example, a signal used to set one of the operation modes within the image pickup system 1000. Specific examples include changing of a line that is to be read or a line that is to be reset, changing of the angle of view due to digital zoom, and shifting of the angle of view due to electronic anti-vibration.

The timing control circuit unit 1050 controls a driving timing of the photoelectric conversion device 1001 and that of the video signal processing circuit unit 1030 based on control performed by the system control circuit unit 1060, which is a control unit.

### Other Embodiments

The above-described embodiments are examples for the disclosure. Various changes may be made without departing from the technical ideas of the disclosure or elements from a plurality of embodiments may be combined. For example, the amplifying portion 20 illustrated in Fig. 1 may be omitted or the input capacitors Cramp and C1 may be omitted in the column comparing unit 30-n.

According to the embodiments of the disclosure, the configuration of a circuit may be prevented from being complicated.

While the disclosure has been described with reference to embodiments, it is to be understood that the disclosure is not limited to the disclosed embodiments. The scope of the following claims is to be accorded the broadest interpretation so as to encompass all such modifications and equivalent configurations and functions.

A photoelectric conversion device includes analog signal output units (11, 20-n) including pixels (11) and configured to output analog signals based on pixels, and signal processing units (30-n, 31, 40-n). Each of the signal processing units is provided correspondingly to one of the analog signal output units and includes a gain application unit (GA) configured to apply a gain to an analog signal and an AD conversion unit (30-n, 31, 40-n). The gain application unit selectively outputs a first amplified signal obtained by applying a first gain of 1 or less to the analog signal or a second amplified signal obtained by applying a second gain, smaller than the first gain, to the analog signal. The AD conversion unit converts, from analog to digital, the first or second amplified signal output from the gain application unit.

## Claims

1. A photoelectric conversion device comprising:
a plurality of analog signal output means (11, 20-n) for including a plurality of pixels (11), each of the plurality of analog signal output means (11, 20-n) for outputting an analog signal based on a pixel of the plurality of pixels (11); and
a plurality of signal processing means (30-n, 31, 40-n);
each of the plurality of signal processing means (30-n, 31, 40-n) being provided correspondingly to one of the plurality of analog signal output means (11, 20-n) and including gain application means (GA) and AD conversion means (30-n, 31, 40-n), the gain application means (GA) being configured to apply a gain to an analog signal,
the gain application means (GA) for selectively outputting a first amplified signal or a second amplified signal, the first amplified signal being a signal obtained by applying a first gain of 1 or less, to the analog signal, the second amplified signal being obtained by applying a second gain, smaller than the first gain, to the analog signal, and
the AD conversion means (30-n, 31, 40-n) for converting, from analog to digital, the first amplified signal or the second amplified signal output from the gain application means (GA).

2. The photoelectric conversion device according to Claim 1, wherein one of the signal processing means (30-n, 31, 40-n) includes determination means (102), and
the determination means (102) being operable to supply the first or second amplified signal to the AD conversion means (30-n, 31, 40-n) based on a result obtained by comparing the first amplified signal with a threshold.

3. The photoelectric conversion device according to Claim 1 or 2, wherein the first gain is 1.

4. The photoelectric conversion device according to Claim 3, wherein the gain application means (GA) includes an attenuator (103) configured to attenuate the analog signal, and
the second amplified signal is generated by the attenuator (103).

5. The photoelectric conversion device according to Claim 4, wherein the attenuator (103) includes a first capacitor element (C2) and a second capacitor element (C3), and
one of nodes of the first capacitor element (C2) is connected to the corresponding one of the plurality of analog signal output means (11, 20-n) and the other node is connected to one of nodes of the second capacitor element (C3) and the AD conversion means (30-n, 31, 40-n).

6. The photoelectric conversion device according to Claim 5, wherein the attenuator (103) includes switching means for switching between connection and disconnection between the one of the nodes of the second capacitor element (C3) and the first capacitor element (C2).

7. The photoelectric conversion device according to Claim 4, wherein the AD conversion means (30-n, 31, 40-n) includes a comparator (101),
the comparator (101) includes first, second, and third input transistors (M1, M4, M2),
the first and second input transistors (M1, M4) constitute a differential pair and the third and second input transistors (M2, M4) constitute a differential pair,
the attenuator (103) is connected to the first input transistor (M1), and
the corresponding one of the plurality of analog signal output means (11, 20-n) is connected to the third input transistor (M2).

8. The photoelectric conversion device according to any one of Claims 1 to 3, wherein the gain application means (GA) includes an amplifier (107) whose gain is variable, and
the first and second amplified signals are generated by the amplifier (107) whose gain is variable.

9. The photoelectric conversion device according to any one of Claims 1 to 3, wherein a portion that contributes to application of a gain to the analog signal in the gain application means (GA) is constituted by passive elements.

10. The photoelectric conversion device according to any one of Claims 1 to 9, wherein the analog signal output means (11, 20-n) includes an amplifier (105) connected to a plurality of pixels included in the corresponding one of the plurality of analog signal output means (11, 20-n).

11. An image pickup system comprising:
the photoelectric conversion device according to any one of Claims 1 to 10;
an optical system (1010) configured to form an image on the plurality of pixels; and
video signal processing means (1030) for generating image data by performing processing on a signal output from the photoelectric conversion device.

12. A driving method of a photoelectric conversion device including a plurality of analog signal output means (11, 20-n) including a plurality of pixels (11), each of the plurality of analog signal output means (11, 20-n) for outputting an analog signal based on a pixel of the plurality of pixels, the driving method comprising:
generating a first amplified signal by applying a first gain of 1 or less to an analog signal;
converting, from analog to digital, the first amplified signal in a case where value of the first amplified signal is smaller than a threshold; and
in a case where value of the first amplified signal is greater than the threshold, converting, from analog to digital, a second amplified signal obtained by applying a second gain, smaller than the first gain, to the analog signal.
